# DEMANDE DE BREVET EUROPEEN

(11) **EP 0 798 100 A1**
(43) Date de publication de la demande: **01.10.1997**
(21) Numéro de dépôt: 97470007.2
(22) Date de dépôt: 11.03.1997
(51) Int. Cl.: B29C 65/52, C09J 5/00, B05B 7/08

(54) **Procédé et dispositif d'encollage d'une matelassure ou d'une coiffe d'habillage d'un siège**

(30) Priorité: 27.03.1996 FR 9604127
(71) Demandeur: BERTRAND FAURE EQUIPEMENTS S.A., 92641 Boulogne Cedex (FR)
(72) Inventeur: Vu Khac, Tam, 91150 Etampes (FR); Blanc, Eric, 45300 Bondaroy (FR); Guerinot, Thierry, 91150 Etampes (FR)
(74) Mandataire: Schmit, Christian Norbert Marie

(57) **Abrégé**

L'encollage est réalisé par pulvérisation sur la matelassure de rembourrage (2) ou la coiffe d'habillage (3) simultanément d'un adhésif mono-composant, tel qu'un adhésif polyuréthanne mono-composant constitué d'un prépolymère d'isocyanate et de polyol, et d'un catalyseur.

Le dispositif comporte une buse (51) de pulvérisation d'adhésif et une buse (53) de pulvérisation de catalyseur orientée transversallement à la buse de pulvérisation d'adhésif, les deux buses étant disposées à proximité l'une de l'autre et de manière que le jet (60) de pulvérisation de catalyseur et le jet (59) de pulvérisation d'adhésif se mélangent entre les dites buses et la surface sur laquelle ils sont pulvérisés.

## Description

La présente invention concerne un procédé et un dispositif d'encollage d'une matelassure ou d'une coiffe d'habillage, mis en oeuvre lors de la fabrication d'un coussin de siège comportant une telle matelassure revêtue d'une coiffe d'habillage.

De tels coussins de siège sont notamment utilisés dans des sièges d'automobiles et peuvent également être utilisés dans des sièges pour l'ameublement.

On connaît déjà, pour des sièges d'automobile, un coussin garni qui se compose d'une matelassure de rembourrage, par exemple en mousse de polyuréthanne moulée ou découpée, et d'une coiffe d'habillage qui peut être réalisée d'un seul tenant ou en un ou plusieurs éléments suivant la complexité des formes et le style demandé. La coiffe, ou ses différents éléments, est généralement réalisée en un matériau multicouches se composant par exemple d'un revêtement d'aspect extérieur (cuir, Tep, textile, etc.), d'une sous-couche en matériau alvéolaire souple ou en nappes de fibres synthétiques ou naturelles, et d'une doublure. Les éléments de la coiffe sont assemblés entre eux par des coutures. Pour la réalisation de ces coutures, et afin d'obtenir une bonne résistance de celles-ci, un excédent de matière, appelé talon de couture, est prévu sur les bords de chaque élément.

La liaison entre la coiffe et la matelassure de rembourrage peut être obtenue par différents moyens, par exemple par des moyens mécaniques. Dans ce cas, des fils métalliques ou plastiques appelés inserts, où viendront s'accrocher certains éléments de la coiffe, sont au préalable insérés dans la matelassure de rembourrage. A cette fin, la coiffe comporte des moyens de rappel, cousus à la coiffe lors de l'opération d'assemblage des différents éléments.

Ces moyens de rappel, par exemple sous forme de sangles constituant des anneaux à leurs extrémités, sont ensuite fixés directement ou indirectement, par des agrafes, crochets ou moyens similaires, aux inserts de la matelassure.

Un inconvénient de ce type de garnissage est que, dans les zones de forme concave du coussin, il est nécessaire d'utiliser un grand nombre de tels moyens de rappels pour que la coiffe épouse le mieux possible le profil de la matelassure sans s'écarter de celle-ci. Ce grand nombre de moyens de rappel, qui doivent être accrochés manuellement sur les inserts, rend ce type de garnissage laborieux et requérant une main-d'oeuvre qualifiée pour sa réalisation. De plus, il est difficile d'assurer une fixation identique des moyens de rappel pour différents coussins, ce qui peut conduire à une hétérogénéité d'aspect de coussins qui devraient pourtant être identiques.

On connaît aussi une autre méthode de fabrication de tels coussins, consistant à lier directement la coiffe d'habillage à la matelassure de rembourrage, par exemple en mousse de polyuréthanne, dans une même et unique opération. La coiffe d'habillage, réalisée en une ou plusieurs parties, est mise en forme par couture des différents éléments la constituant, sans aucun des moyens de rappel mentionnés ci-dessus.

Dans ce cas, la coiffe se compose d'un revêtement d'aspect extérieur et d'une couche d'un matériau alvéolaire souple spécifique. C'est l'expansion de la mousse polyuréthanne ou similaire dans un moule fermé, où la coiffe a été au préalable positionnée, qui permet la liaison de la matelassure de rembourrage à la coiffe d'habillage, par pénétration de la mousse dans le matériau alvéolaire.

Du fait de cette pénétration, il peut apparaître en certains endroits, en particulier au niveau des coutures, des zones durcies. De plus, les talons de coutures sont emprisonnés dans le matériau expansé : il en résulte, au fond des gorges de marquage de style, un durcissement et donc un toucher non confortable. On appelle gorge de marquage de style les lignes en creux de la surface du coussin correspondant notamment aux zones des coutures, et sur la forme desquelles, vue en section, il est connu de jouer pour modifier l'aspect visuel du coussin.

Une autre méthode encore consiste à lier la coiffe d'habillage à la matelassure de rembourrage, par un adhésif inséré entre les deux. Dans ce cas également, la matelassure de rembourrage et la coiffe d'habillage ne comportent aucun élément mécanique permettant leur liaison. La coiffe d'habillage se compose aussi d'un revêtement d'aspect, d'un matériau alvéolaire souple et d'une doublure, et peut être en une ou plusieurs parties. Dans le cas d'une coiffe en plusieurs parties, les différentes parties sont assemblées par couture ou soudure.

L'adhésif déposé entre la coiffe et la matelassure peut avoir diverses compositions chimiques (par exemple à base de polyuréthanne, polyamide, caoutchoucs, etc.) et peut être déposé sous différentes formes, notamment :
- sous forme de film thermofusible, tel que décrit notamment dans les documents US-A-4.692.199 ou FR-A-2.601.897. Dans ce cas, le procédé nécessite des moyens de réactivation du film thermofusible à haute température au moyen d'outillages chauffants ou de vapeur. Le produit obtenu présente de plus un mauvais confort en raison du film d'adhésif imperméable ;
- sous forme d'adhésif thermofusible, tel que décrit dans le brevet JP 93076666. Dans ce cas, il y a également nécessité de moyens de réactivation par air chaud ou vapeur, mais aussi des moyens de refroidissement. De plus, le coût de ce type d'adhésif et des moyens de mise en oeuvre est élevé.
- par pulvérisation d'au moins un composant d'un adhésif à deux composants sur l'une des surfaces à assembler, le deuxième composant pouvant être pulvérisé soit sur la même surface, soit sur l'autre surface, simultanément avec ou après le premier, mais toujours juste avant l'assemblage.

Les adhésifs polyuréthanne bicomposants classiques sont constitués d'un premier composant (A), par exemple de l'isocyanate, et d'un deuxième composant (B), par exemple du polyol.

Afin de conférer les meilleures caractéristiques de confort possibles, mais aussi une tenue de la liaison coiffe/matelassure répondant aux exigences des constructeurs automobiles, les composants isocyanate (A) et polyol (B) doivent être pulvérisés en quantité très précises. Le rapport en poids des composants peut être par exemple de 1/5, soit 1 part d'isocyanate pour 5 parts de polyol.

Dans le procédé d'utilisation d'un adhésif polyuréthanne bi-composants classique, il existe plusieurs façons d'application, toutes difficiles à mettre en oeuvre.

Les composants étant très réactifs, l'isocyanate (A) et le polyol (B) doivent être mis en présence l'un de l'autre le plus tard possible, ou l'application de la coiffe sur la matelassure doit être réalisée immédiatement après la pulvérisation des deux composants (A) et (B).

Dans le premier cas, le composant isocyanate (A) pourrait être par exemple pulvérisé sur la coiffe de garnissage et le composant polyol (B) pourrait être pulvérisé par exemple sur la matelassure, ou inversement. La mise en présence des deux composants (A) isocyanate et (B) polyol se produit alors lors du pressage. Cette technique a l'inconvénient de requérir une double pulvérisation, l'une sur la matelassure, l'autre sur un substrat souple, la coiffe. De plus le positionnement d'une coiffe ainsi préencollée sur un outillage de collage devient une opération délicate qui requiert une grande dextérité ainsi qu'un temps de positionnement important.

Dans le deuxième cas, le composant (A), isocyanate et le composant (B) polyol sont pulvérisés tous les deux sur la matelassure ou sur la coiffe de garnissage. Cette technique implique une double pulvérisation puis un pressage de la coiffe de garnissage sur la matelassure quasi immédiat.

Il existe une autre famille d'adhésifs polyuréthannes, les adhésifs polyuréthannes mono-composant. Les adhésifs mono-composant sont constitués d'un prépolymère composé des éléments (A) isocyanate et (B) polyol, que l'on appellera encore "sous-composants", déjà mélangés en quantités très précises. Ce type d'adhésifs polyuréthannes mono-composant a l'avantage, par rapport aux adhésifs polyuréthannes bi-composants, de ne nécessiter qu'une unique pulvérisation.

Ces adhésifs polyuréthannes mono-composant, afin de réagir et de provoquer l'adhésion de la coiffe à la matelassure, nécessitent pour leur activation l'aide d'un fluide caloporteur chargé d'humidité, tel que la vapeur d'eau, au travers de la coiffe de garnissage, comme cela est décrit dans EP-A-263798. Or, à ce jour, de nombreuses coiffes de garnissage sont réalisées à partir de textiles très sensible à l'association compression/chaleur. Par exemple, les textiles velours acryliques très fragiles n'acceptent pas des températures supérieures à 70°C, sous pression. Ce type de technologie utilisant des adhésifs polyuréthannes mono-composant, ne peut être utilisé que pour certains types de textiles et ne peut donc pas répondre à toutes les attentes des constructeurs automobiles.

La présente invention a pour but de supprimer ou au moins réduire les inconvénients mentionnés ci-dessus, et vise plus particulièrement l'obtention d'un coussin de siège présentant un bon confort et un aspect esthétique certain, au moyen d'un procédé et d'un dispositif de fabrication simple et économique, et pouvant être mis en oeuvre quels que soient les matériaux utilisés pour la coiffe de garnissage.

Avec ces objectifs en vue, l'invention a pour objet un procédé d'encollage pour la fabrication d'un coussin de siège comportant une matelassure de rembourrage revêtue d'une coiffe d'habillage, selon lequel on pulvérise sur l'une des surfaces à assembler un adhésif polyuréthanne mono-composant constitué d'un prépolymère d'isocyanate et de polyol, caractérisé en ce que l'adhésif est pulvérisé simultanément avec un catalyseur par des buses de pulvérisations respectives et de manière à se mélanger entre les dites buses et la surface sur laquelle ils sont pulvérisés, l'adhésif étant pulvérisé sous la forme d'un jet dirigé vers la dite surface et le catalyseur étant pulvérisé dans le jet d'adhésif et transversalement à la direction du dit jet.

Préférentiellement, le catalyseur est un catalyseur ou un mélange de catalyseurs choisi(s) parmi les catalyseurs à base d'amines tertiaires, aromatiques ou non, ou de sels organométalliques, ou encore d'eau.

L'adhésif selon la présente invention, bien que ressemblant par son mode de pulvérisation à un adhésif polyuréthanne bi-composants, est issu de la famille des polyuréthanne mono-composant, c'est à dire constitué d'un prépolymère isocyanate (A) plus polyol (B).

La réaction du polyol de formule (OH-R-OH) sur l'isocyanate de formule (OCN-R'-NCO) donne un polyuréthanne. Lors de cette réaction, certaines molécules de NCO de l'isocyanate n'auront pas réagi avec le polyol. Ces molécules sont appelées alors "NCO libres". Les molécules de NCO libres de l'isocyanate (A), n'ayant pas réagi avec le polyol (B), réagissent entre elles et avec le composant (C) de la famille des catalyseurs, qui permet suivant sa composition d'activer la réaction de collage.

Le composant (C) issu de la famille des catalyseurs, permet, de par sa nature, de créer et d'activer la réaction chimique du prépolymère (A+B) en évitant l'utilisation d'un fluide caloporteur à température élevée tel que la vapeur, laquelle ne permet pas l'utilisation comme coiffe d'habillage de tout type de textiles et ne permet donc pas de répondre aux attentes des constructeurs.

Ce catalyseur (C) pourra être un mélange de plusieurs types de catalyseurs comme par exemple des catalyseurs à base d'amines tertiaires, aromatiques ou non, de sels organométalliques, d'eau ou autres, conférant ainsi à l'assemblage collé des propriétés diverses, telles qu'une bonne tenue de l'ensemble collé, une souplesse et une bonne perméabilité de la liaison.

La très faible quantité d'adhésif qui peut être déposée par pulvérisation en une pluralité de points permet de conférer au coussin garni de très bonnes propriétés de confort hygrothermique et de confort d'approche.

Les propriétés de confort hygrothermique sont, dans le cas de la présente invention, nettement améliorées par rapport aux procédés connus que ce soit par collage ou par expansion de mousse polyuréthanne et deviennent équivalentes à celles du garnissage traditionnel.

Les propriétés de toucher d'un coussin garni obtenu par le procédé selon l'invention sont telles qu'il est très difficile de pouvoir différencier un coussin garni réalisé selon l'invention et un coussin garni suivant la technologie de garnissage traditionnelle.

Les différents catalyseurs utilisés peuvent suivant les proportions dans lesquelles ils sont utilisés, permettre à la réaction d'être accélérée et d'avoir ainsi une polymérisation plus rapide de l'adhésif.

Par exemple, une amine tertiaire aromatique favorisera la réaction de polyurée (amine + isocyanate), alors que les organométalliques favoriseront la réaction polyol + isocyanate.

Les caractéristiques du catalyseur (C) choisi permettront ainsi de pouvoir contrôler précisément le temps ouvert, c'est à dire le laps de temps entre la pulvérisation de l'adhésif sur la matelassure ou sur la coiffe, et la mise en contact de la coiffe de garnissage avec la matelassure.

Cette latitude donnée au choix du temps de pressage permet de contrôler très précisément le temps de cycle de fabrication et de pouvoir gérer au mieux l'installation de collage, en répartissant dans le temps les différentes opérations.

La rapidité de la réaction du prépolymère (A+B) peut être accélérée comme décrit précédemment par l'utilisation de catalyseurs, mais aussi par un chauffage contrôlé, à l'aide d'un fluide caloporteur. Le fluide caloporteur, qui peut être de l'air chaud, est pulsé préférentiellement vers l'interface entre la coiffe de garnissage et la matelassure au travers de la coiffe après assemblage. La température pouvant être utilisée doit alors être toujours inférieure à 70°C, afin de ne pas endommager les textiles fragiles tels que les textiles velours acryliques. La réaction de polymérisation ne dépendant plus uniquement du fluide caloporteur, comme cela est le cas des adhésifs polyuréthannes mono-composant, une large plage de réglage de la température, par exemple entre 25°C et 70°C, est admissible sans compromettre la tenue de la liaison. Cette liberté donnée dans le choix de la température lors du pressage permet de pouvoir, le cas échéant, associer une température à un textile, par exemple une température de 50° pour l'utilisation d'un textile fragile tel qu'un textile velours acrylique.

L'adhésif décrit dans la présente invention doit, pour conférer au siège toutes les qualités d'adhésion maximale mais aussi de confort hygrothermique et de souplesse, être pulvérisé de façon à ce que chaque molécule de NCO libres du prépolymère (A+B) ait réagi. Les molécules NCO du prépolymère (A+B) réagissent dans le temps imparti pour l'opération de pressage, en présence de catalyseur.

Un excès de catalyseur (C) peut accélérer la réaction et provoquer une polymérisation précoce, avant pressage, et donc une non adhésion de la coiffe de garnissage à la matelassure après pressage.

Une insuffisance de catalyseur (C) peut freiner la réaction et provoquer une polymérisation retardée, après pressage, et donc une non adhésion dans le temps de cycle prévu.

Les composants (A+B) et composant (C) doivent donc être pulvérisés de façon précise en quantité, par exemple dans un rapport respectivement de 1/1, 3/1 ou 10/1, mais aussi de façon précise en lieu.

Les différentes proportions de catalyseurs permettent de pouvoir contrôler précisément les temps ouvert et temps de prise. Ainsi, des rapports quantitatifs (A+B)/(C) de 1/1 favoriseront le temps de prise alors que des rapports de 5/1 favoriseront le temps ouvert (temps admissible entre l'encollage et le temps de mise sous presse).

Chaque particule (A+B) doit avoir dans son voisinage immédiat une particule (C), ce qui permettra à l'adhésif de polymériser dans le temps prévu, et d'avoir en tout point de la surface encollée, les mêmes caractéristiques.

C'est pourquoi, conformément à l'invention, l'adhésif et le catalyseur sont pulvérisés par des buses de pulvérisations respectives et de manière à se mélanger entre les dites buses et la surface sur laquelle ils sont pulvérisés.

Autrement dit, afin d'obtenir un mélange homogène parfait des particules (A+B) et (C), les deux composants de l'adhésif (A+B) et (C) sont pulvérisés par le même pistolet au même moment, mais en mélange externe. Ce mélange externe permet d'éviter l'encrassement du pistolet qui résulterait autrement de la réaction, favorisée par le catalyseur (C), du prépolymère (A+B) à l'intérieur du pistolet après quelques pulvérisations.

Grâce au fait que le mélange est effectué dans le jet de pulvérisation, les deux composants (A+B) et (C) sont mis en contact au dernier moment, juste avant d'arriver sur la surface à encoller.

On notera l'intérêt de pouvoir régler aisément les débits d'adhésif et de catalyseur indépendamment l'un de l'autre, pour pouvoir ajuster précisément leurs proportions relatives, afin de pouvoir adapter facilement les durées de temps de prise ou temps ouvert aux conditions de mise en oeuvre (nature de l'adhésif et du catalyseur, ambiance de l'environnement,. et durée, dépendant du processus de fabrication, entré l'encollage et l'assemblage).

Conformément à l'invention également, l'adhésif est pulvérisé sous la forme d'un jet dirigé vers la dite surface, sensiblement perpendiculairement à celle-ci, et le catalyseur est pulvérisé dans le jet d'adhésif transversalement, préférentiellement perpendiculairement, à la direction du dit jet. Ceci permet d'assurer un mélange le plus homogène possible en tenant compte des différences de quantité pulvérisée et de viscosité entre le composant (A+B) et le catalyseur (C) . Cette disposition permet en fait aux particules, généralement plus nombreuses, du composant (A+B), qui est plus visqueux que le catalyseur (C), de capter et d'entraîner les particules de ce dernier dans le jet du composant (A+B), en les brassant fortement pour assurer un mélange homogène, le réglage des débits respectifs des composants (A+B) et (C) permettant de contrôler très précisément la composition finale du mélange déposé sur la surface encollée.

L'invention a aussi pour objet un dispositif d'encollage d'une matelassure ou d'une coiffe d'habillage d'un siège, pour la mise en ouvre du procédé ci-dessus, caractérisé en ce qu'il comporte une buse de pulvérisation d'adhésif et une buse de pulvérisation de catalyseur, la buse de pulvérisation du catalyseur étant orientée transversalement à la buse de pulvérisation d'adhésif.

Préférentiellement, l'extrémité de la buse de pulvérisation du catalyseur est située juste en aval de la buse de pulvérisation d'adhésif et à proximité directe du jet issu de la buse de pulvérisation d'adhésif.

Par ailleurs, le dispositif comporte des moyens de réglage indépendants des débits d'adhésif et de catalyseur.

D'autres caractéristiques et avantages de l'invention apparaîtront dans la description qui va être faite d'un coussin de siège d'automobile conforme à l'invention, ainsi que du procédé et du dispositif d'encollage et d'assemblage de la coiffe sur la matelassure.

On se reportera aux dessins annexés dans lesquels :
- la figure 1 est une vue en perspective et en coupe d'un tel coussin,
- la figure 2 est une vue de la tête d'un pistolet d'encollage permettant la pulvérisation simultanée des deux composants de l'adhésif, conformément à l'invention,
- la figure 3 est une vue schématique de l'installation de pulvérisation comportant un tel pistolet,
- la figure 4 montre la répartition aléatoire des points de colle obtenue,
- la figure 5 est une vue schématique du dispositif de mise en place de la coiffe sur la matelassure, avant assemblage,
- la figure 6 est une vue en coupe du coussin, après collage de la coiffe.

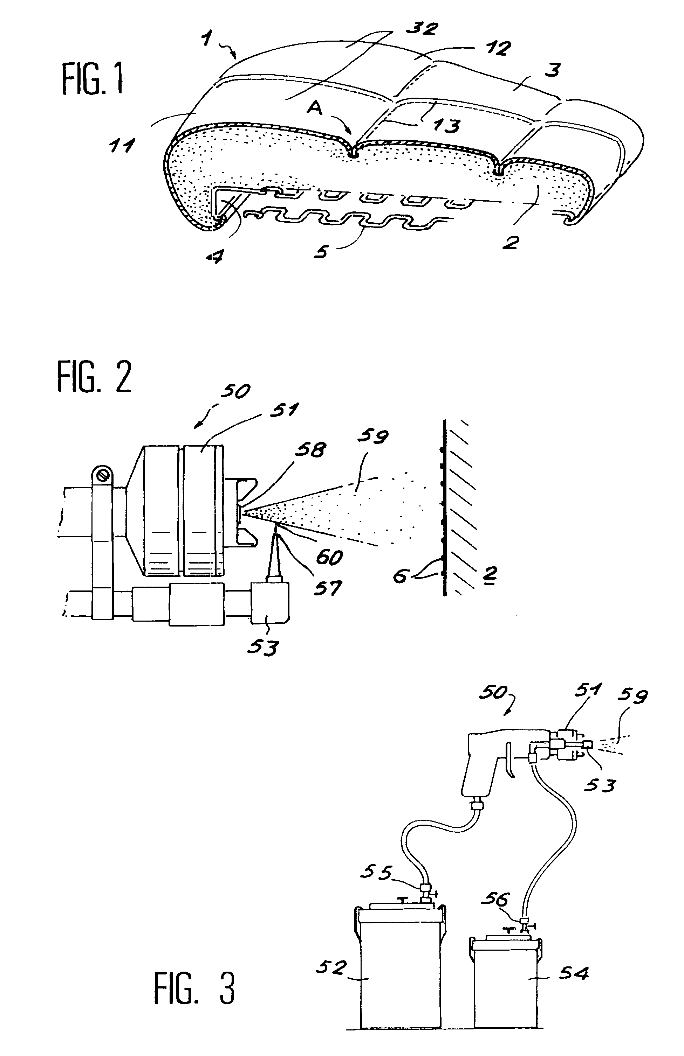

Le coussin 1 de siège, représenté à la figure 1, comporte, de manière générale, une matelassure 2, par exemple en mousse de polyuréthanne moulée et/ou découpée à la forme requise, et une coiffe d'habillage 3 qui constitue le revêtement extérieur du coussin.

La matelassure est fixée, de manière connue en soi, sur une armature 4 du siège, pourvue de moyens de suspension 5.

La coiffe 3 est classiquement formée de plusieurs éléments 32 découpés dans des matériaux de revêtement classiques, tels que ceux indiqués au début de ce mémoire, assemblés entre eux par exemple par couture. Les éléments de coiffe recouvrant la partie centrale 11 du coussin peuvent par exemple être réalisés dans des matériaux différents de ceux utilisés pour en recouvrir les bords 12. Par ailleurs, au niveau des coutures d'assemblage de ces différents éléments, ou même en d'autres endroits, le coussin comporte des gorges de marquage de style 13, qui sont des renfoncements de la surface extérieure du coussin, sous forme de creux s'étendant linéairement, donnant un aspect visuel spécifique à chaque type de coussin. On peut de plus jouer sur la profondeur, la largeur et l'inclinaison des parois de ces gorges de marquage de style, pour modifier l'aspect visuel.

En relation avec les figures 2 à 6, on va maintenant décrire le procédé de fabrication d'un coussin conforme à l'invention.

Le dessin de la figure 5 représente de manière simplifiée le dispositif 40 de mise en place de la coiffe 3 sur la matelassure 2, avant assemblage de celles-ci par collage.

Ce dispositif comporte essentiellement une matrice de collage 41 dont une face 42 est creusée pour présenter une forme complémentaire de la forme souhaitée pour la surface extérieure visible du coussin terminé. La matrice 41 est fixée sur une plaque de support 43 par des moyens simples de type connu, non représentés, permettant un remplacement rapide de la matrice en fonction du type de coussin à réaliser.

Au niveau prévu des gorges de marquage de style 13, la matrice comporte des baguettes 44, rapportées en saillie sur la face conformée 42, et de section correspondante à celle des gorges de marquage de style souhaitées. Ces baguettes rapportées 44 sont fixées de manière amovible sur la matrice 41, par exemple par des pions de centrage, ce qui permet l'utilisation d'une même matrice pour différents styles de coussins de siège, en changeant, ajoutant ou supprimant certaines de ces baguettes rapportées; ceci permet de réduire les coûts d'outillage et de montage.

Par ailleurs, le dispositif comporte également un plateau de pressage 45, mobile par rapport à la matrice (flèche F) et comportant des moyens de maintien 46 de la matelassure 2, préférentiellement conformés de manière à épouser la forme des dégagements 22 de la matelassure destinés à maintenir par la suite celle-ci sur l'armature du siège.

L'assemblage de la coiffe 3 sur la matelassure 2, au moyen du dispositif décrit précédemment, s'effectue de la manière suivante.

La coiffe 3, préalablement assemblée par couture des différents éléments 32 qui la composent, est placée sur la matrice 41, de manière à épouser sa forme, les joints entre les différents éléments 32 étant disposés sur les baguettes 44 qui, en plus de conformer ces joints à la forme souhaitée des gorges de marquage de style, les maintiennent exactement en position pour éviter un glissement des éléments 32 de la coiffe 3 sur la surface 42 de la matrice lors de l'approche de la matelassure, et comme on va le voir par la suite, garantir une parfaite insertion des talons de couture 34 dans les rainures correspondantes de la dite matelassure. Le maintien de la coiffe peut par ailleurs être complété, de manière connue en soi, par des pinces (non représentées) de fixation des bords de la coiffe et/ou par une éventuelle aspiration de la coiffe, réalisée à travers des canaux ménagés dans la matrice, selon des procédés connus notamment pour la fabrication de coussins par injection et expansion de mousse dans un moule, selon l'art antérieur décrit au début de ce mémoire.

La matelassure 2, préalablement réalisée par moulage ou découpe, en mousse de polyuréthanne, et dans laquelle sont ménagées les rainures 21, est fixée sur le plateau 45.

Avant d'amener la matelassure 2 au dessus du plateau de pressage 43 dans la position représentée figure 5, un adhésif est déposé sur la surface de la matelassure 2, comme représenté figure 2, ou sur l'envers de la coiffe, au moyen d'un pistolet d'encollage spécifique 50, conforme à la présente invention.

Ce pistolet 50 comporte une première buse de pulvérisation 51, alimentée sous pression en adhésif polyuréthanne mono-composant à partir d'un premier réservoir 52, et une deuxième buse 53 alimentée en catalyseur à partir d'un deuxième réservoir 54. Le dispositif comporte également des moyens de réglage du débit et de la pression d'alimentation de chaque buse, schématiquement représentés par les repères 55, 56, ces moyens de réglage pouvant être aussi situés directement sur le pistolet 50.

L'axe de la deuxième buse 53 est orienté perpendiculairement à celui de la première buse 51, l'orifice de sortie 57 de la deuxième buse étant situé devant l'orifice de sortie 58 de la première buse, à faible distance de celui-ci et décalé par rapport à son axe, de manière à se trouver proche mais hors du jet de pulvérisation 59 issu de la première buse.

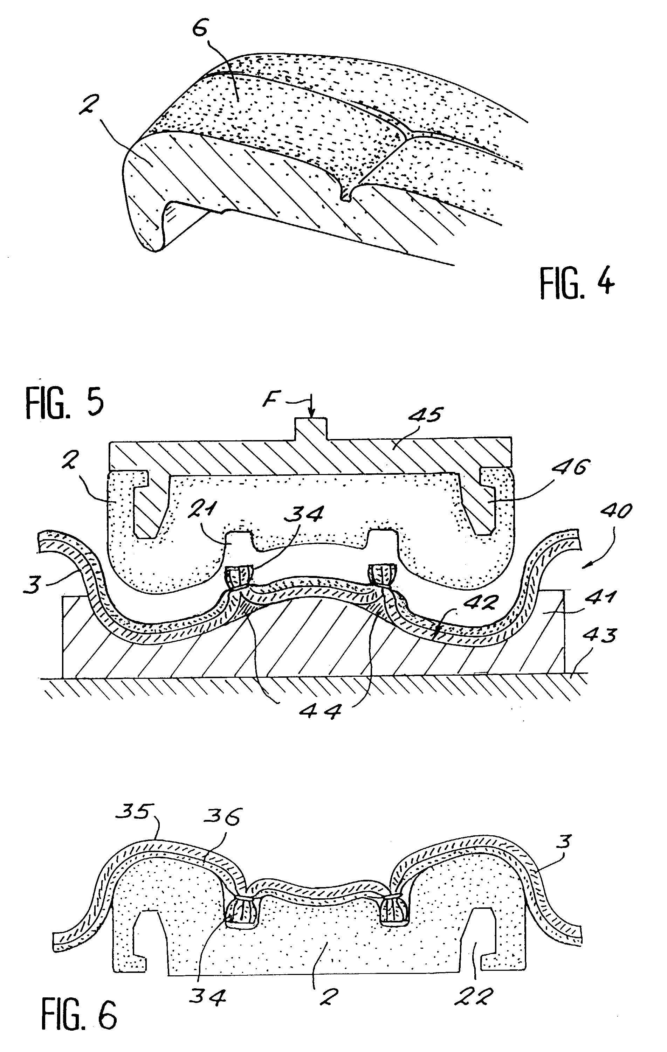

Ainsi, lors de la pulvérisation, et moyennant de régler de manière adéquate les débits et pressions d'alimentation de chaque buse, le jet 60 de catalyseur est en fait dirigé directement dans le jet 59 de polyuréthanne, les particules de ce dernier entraînant avec elles les particules de catalyseur vers la surface de la matelassure 2, en formant un brouillard très fin qui se dépose en fines gouttelettes formant un grand nombre de points 6 d'adhésif répartis aléatoirement sur la surface 2, ainsi que cela est représenté figure 4.

Ces points d'adhésif sont par ailleurs préférentiellement répartis uniquement dans certaines zones de la surface de la matelassure, où la liaison de celles-ci est nécessaire pour obtenir le style recherché du coussin, par exemple dans les zones concaves du coussin où la coiffe doit être maintenue parfaitement contre la matelassure, ou dans les zones des gorges de marquage de style. A cet effet, on pourra par exemple utiliser un masque d'encollage disposé sur la matelassure et laissant apparaître uniquement les zones ou l'encollage est souhaité. En particulier, l'adhésif peut être déposé dans les rainures 21 de la matelassure ou sur les talons de couture 34.

Puis, après cet encollage, la matelassure 2 est approchée de la matrice 41 contenant la coiffe, au moyen du plateau 45. Lors de cette approche, les talons de couture 34, prépositionnés par les baguettes 44, s'insèrent automatiquement et sans difficulté dans les rainures 21 de la matelassure, notamment grâce au fait que l'adhérence n'est pas instantanée. Par la poursuite du mouvement du plateau 45, la matelassure 2 est amenée au contact de la coiffe et pressée sur celle-ci, ce qui provoque une pré-adhésion dans tous les points où l'adhésif a été déposé. La matelassure est ensuite retirée avec la coiffe y adhérant, les bords non collés de la coiffe pouvant être ensuite fixés, par collage ou tout autre moyen de type connu, sur les éléments prévus à cet effet sur l'armature du siège ou sur la matelassure elle-même, par rabattement de ces bords contre les surfaces latérales de la dite matelassure, comme représenté à la figure 11.

Accessoirement, la polymérisation pourra être accélérée par un souffle d'air chaud, à une température restant cependant assez basse, entre 25°C et 70°C, déterminée en fonction du matériau de la coiffe. Cet air chaud pourra par exemple être amené au contact de la coiffe à travers des orifices réalisés à cet effet dans la matrice 41.

On notera que le dépôt d'adhésif en un grand nombre de points permet de conserver les caractéristiques de perméabilité à l'air et de souplesse des matériaux utilisés tant pour la coiffe que pour la matelassure, contrairement à l'utilisation, par exemple, d'un film adhésif ou d'une couche uniforme de colle, ce qui confère au siège obtenu un bon confort tactile, hygrométrique et thermique.

On notera également que l'adhésion définitive n'étant obtenue qu'avec un certain retard, réglable par le dosage des deux composants, par exemple de l'ordre de quelques minutes, il est possible de réajuster si nécessaire la coiffe sur la matelassure après que l'ensemble ait été retiré de la matrice.

Par ailleurs, du fait de la faible température de collage, on peut utiliser indifféremment comme couche de revêtement d'aspect 35, tous les types de revêtements : textiles perméables (tissus, tricots, etc.), textiles imperméables (cuir, tissu enduit plastique, etc.), textiles délicats ou fragiles (velours, produits floqués, etc.), textiles avec ou sans allongements. On peut également utiliser tous les types de complexe textile : revêtements nus, revêtement avec enduction d'envers (acrylique), revêtement avec matériau de rembourrage 36 (mousse de polyuréthanne, feutre, non-tissé), revêtement avec matériau de rembourrage et doublure (tricot, non-tissé, etc.).

## Revendications

1. Procédé d'encollage pour la fabrication d'un coussin de siège (1) comportant une matelassure de rembourrage (2) revêtue d'une coiffe d'habillage (3), selon lequel on pulvérise sur l'une des surfaces à assembler un adhésif polyuréthanne mono-composant constitué d'un prépolymère d'isocyanate et de polyol, caractérisé en ce que l'adhésif est pulvérisé simultanément avec un catalyseur par des buses de pulvérisations respectives (51, 53) et de manière à se mélanger entre les dites buses et la surface sur laquelle ils sont pulvérisés, l'adhésif étant pulvérisé sous la forme d'un jet (59) dirigé vers la dite surface et le catalyseur étant pulvérisé dans le jet d'adhésif et transversalement à la direction du dit jet.

2. Procédé selon la Revendication 1, caractérisé en ce que le catalyseur est un catalyseur ou un mélange de catalyseurs choisi(s) parmi les catalyseurs à base d'eau ou d'amines tertiaires ou de sels organométalliques.

3. Procédé selon la Revendication 1, caractérisé en ce que les débits d'adhésif et de catalyseur sont réglables indépendamment l'un de l'autre.

4. Procédé selon la Revendication 1, caractérisé en ce que, après l'assemblage de la coiffe (3) sur la matelassure (2), on procède à un chauffage contrôlé de l'assemblage par un fluide caloporteur à uné température inférieure à 70°C.

5. Dispositif d'encollage d'une matelassure (2) ou d'une coiffe d'habillage (3) d'un siège, pour la mise en oeuvre du procédé selon l'une quelconque des revendications précédentes, caractérisé en ce qu'il comporte une buse (51) de pulvérisation d'adhésif et une buse (53) de pulvérisation de catalyseur orientée transversalement à la buse (51) de pulvérisation d'adhésif.

6. Dispositif d'encollage selon la Revendication 5, caractérisé en ce que l'extrémité (57) de la buse (53) de pulvérisation du catalyseur est située juste en aval de la buse (51) de pulvérisation d'adhésif et à proximité directe du jet (59) issu de la buse de pulvérisation d'adhésif.

7. Dispositif d'encollage selon l'une des Revendications 5 ou 6, caractérisé en ce qu'il comporte des moyens (55, 56) de réglage pour régler les débits d'adhésif et de catalyseur indépendamment l'un de l'autre.
